# EUROPÄISCHE PATENTSCHRIFT

(11) **EP 1 173 319 B1**
(45) Veröffentlichungstag und Bekanntmachung des Hinweises auf die Patenterteilung: **05.03.2003**
(21) Anmeldenummer: 00918849.1
(22) Anmeldetag: 05.04.2000
(51) Int. Cl.: B29C 51/14, B29D 24/00

(54) **VERFAHREN ZUM VERFORMEN VON HOHLKÖRPERPLATTEN AUS THERMOPLASTISCHEM MATERIAL**
METHOD FOR SHAPING THERMOPLASTIC HOLLOW BOARDS
PROCEDE DE FORMAGE DE PLAQUES A CORPS CREUX EN MATERIAU THERMOPLASTIQUE

(30) Priorität: 26.04.1999 DE 19918784
(43) Veröffentlichungstag der Anmeldung: 23.01.2002
(73) Patentinhaber: KR-Porsiplast Verpackungssysteme GmbH, 76461 Muggensturm (DE)
(72) Erfinder: FEURER, Markus, D-76316 Malsch (DE)
(74) Vertreter: KOHLER SCHMID + PARTNER
(86) Internationale Anmeldenummer: EP0003011
(87) Internationale Veröffentlichungsnummer: WO00064659

(56) Entgegenhaltungen:
- EP-A- 0 135 708
- EP-A- 0 649 736
- DE-A- 19 604 613
- FR-A- 2 208 767
- FR-A- 2 607 434
- US-A- 4 172 749
- US-A- 5 238 725

## Beschreibung

Die Erfindung betrifft ein Verfahren zum Verformen von Hohlkörperplatten aus thermoplastischem Material mit wenigstens einem zu dem Plattenrand hin offenen Hohlraum im Platteninnern, wobei der Hohlraum im Platteninnern am Plattenrand abgedichtet und dadurch nach außen im wesentlichen, gasdicht verschlossen wird und wobei die zu verformende Hohlkörperplatte unter Erwärmen erweicht und im erweichten Zustand bei nach außen im wesentlichen gasdicht verschlossenem Hohlraum durch äußere Beaufschlagung mit einem Verformungsdruck verformt wird.

Bekannte thermoplastische Hohlkörperplatten bestehen aus zwei parallelen Decklagen sowie zwischen diesen angeordneten Abstandhaltern beispielsweise in Form von Trennstegen oder von napfartigen Ausformungen einer zwischen den Decklagen vorgesehenen Zwischenlage. Dabei befinden sich im Innern der Hohlkörperplatten, d.h. zwischen deren Decklagen, zu dem Plattenrand hin offene Hohlräume. Zum verformen werden derartige randoffene thermoplastische Hohlkörperplatten bekanntermaßen durch Wärmezufuhr erweicht und im erweichten Zustand beispielsweise mittels Tiefzieheinrichtungen oder Pressen mit einem äußeren Verformungsdruck beaufschlagt. Infolge der mit dem Erweichen verbundenen Destabilisierung der Hohlkörperplatte in sich, insbesondere der zwischen ihren Decklagen angeordneten Abstandhalter, geht die Verformung der Hohlkörperplatten nach dem bekannten Verfahren bzw. mittels der bekannten Vorrichtungen häufig einher mit einer unerwünschten Veränderung der Plattenstruktur, vor allem mit einer unerwünschten, nicht wieder zu behebenden Komprimierung der Hohlkerperplatten senkrecht zu den Decklagen.

Ein gattungsgemäßes Verfahren ist in US-A-4,172,749 offenbart. Dabei werden Hohlkörperplatten mit randoffenen Hohlräumen verformt. In diesen Hohlräumen steht ein gasförmiges Medium, beispielsweise Luft, an. Vor Beginn des eigentlichen verformungsvorganges werden die gasgefüllten Hohlräume am Rand der Hohlkörperplatte gasdicht verschlossen. Bei derart verschlossenen Hohlräumen wird die Hohlkörperplatte schließlich verformt. Das im Innern der Hohlräume anstehende gasförmige Medium baut dabei einen Druck auf, der dem äußeren Verformungsdruck entgegenwirken und dadurch eine unerwünschte Stauchung der zu verformenden Hohlkörperplatte verhindern soll.

Ausgehend von diesem Stand der Technik hat es sich die vorliegende Erfindung zum Ziel gesetzt, die Formbeständigkeit zu verformender bzw. verformter Hohlkörperplatten zu optimieren.

Gelöst wird diese Aufgabe erfindungsgemäß dadurch, daß der wenigstens eine im Platteninnern befindliche Hohlraum unter Offenlassen zumindest einer Zufuhröffnung für in den Hohlraum aufzugebendes Füllmedium abgedichtet oder daß nach vollständigem Verschluß des Hohlraumes wenigstens eine Zufuhröffnung für Füllmedium in die Hohlraumwandung eingebracht wird und daß der nach außen im wesentlichen gasdicht verschlossene Hohlraum mit wenigstens einem Füllmedium beschickt und die zu verformende Hohlkörperplatte bei mit Füllmedium beschicktem Hohlraum durch äußere Beaufschlagung mit dem Verformungsdruck verformt wird. Das oder die Füllmedien unterstützen den Druckaufbau im Innern des Hohlraumes. Durch Offenlassen wenigstens einer Zufuhröffnung für in den Hohlraum aufzugebendes Füllmedium wird auf einfache Art und Weise die Voraussetzung dafür geschaffen, Füllmedium in den Hohlraum aufgeben zu können. Das im Innern des Hohlraums eingeschlossene Medium übt bei äußerer Beaufschlagung der Hohlkörperplatte mit dem Verformungsdruck einen Gegendruck zu dem äußeren Verformungsdruck aus und bewirkt dadurch eine Stabilisierung der Hohlkörperplatte. Diese kann daher ungeachtet ihrer Erweichung auch während des Verformungsvorganges ihre Struktur an sich beibehalten.

Zur Abdichtung des Hohlraumes am Plattenrand bletet sich erfindungsgemäß eine Mehrzahl von Möglichkeiten. So kann beispielsweise eine Dichtmanschette auf den Plattenrand aufgesetzt werden. Bevorzugtermaßen aber wird der Hohlraum im Platteninnern unter Zusammendrücken des Plattenrandes abgedichtet. Diese Verfahrensemaßnahme zeichnet sich durch eine einfache Realisierbarkeit aus. Dabei kann das Zusammendrücken des Plattenrandes sowohl bei "kalter" als auch bei erwärmter und dadurch zumindest teilweise plastifizierter Hohlkörperplatte erfolgen.

In weiterer bevorzugter Ausgestaltung des erfindungsgemäßen verfahrens wird ein Füllmedium verwendet, dessen Temperatur die Ausgangstemperatur der zu verformenden Hohlkörperplatte übersteigt. In diesem Fall trägt das Füllmedium nicht nur zum Aufbau des Innendruckes in dem Hohlraum der Hohlkörperplatte bei sondern wird darüber hinaus auch zur Erwärmung und dadurch zur Plastifizierung der Hohlkörperplatte genutzt. Dabei kann die Plastifizierung der Hohlkörperplatte ausschließlich mittels des Füllmediums erfolgen; das Füllmedium kann aber auch lediglich zur Unterstützung weiterer, der Hohlkörperplatte von außen wärme zuführender Wärmequellen dienen. In dem letztgenannten Fall ergeben sich für die Verformung der betreffenden Hohlkörperplatten besonders kurze Taktzeiten.

Im Rahmen des erfindungsgemäßen Verfahrens kann der Hohlraum im Innern der Hohlkörperplatte mit nahezu jedem beliebigen fließfähigen Füllmedium, insbesondere mit nahezu jedem beliebigen gasförmigen oder flüssigen Füllmedium, beschickt werden. Dabei ist es von besonderem Vorteil, den nach außen im wesentlichen gasdicht verschlossenen Hohlraum mit Wasserdampf als Füllmedium zu beschicken. Wasserdampf ist einfach zu erzeugen, und zeichnet sich insbesondere auch durch seine ökologische Unbedenklichkeit aus.

Nachstehend, wird die Erfindung anhand schematischer Darstellungen näher erläutert. Es zeigen:
- Fign. 1 und 2: Bauarten von Hohlkörperplatten aus thermoplastischem Material mit Hohlräumen im Platteninnern,
- Fig. 3: einen schematisierten Schnitt durch die Hohlkörperplatte gemäß Fig. 1 bei nach herkömmlichem Verfahren abgedichtetem Hohlraum im Platteninnern und
- Fig. 4: einen schematisierten Schnitt durch die Hohlkörperplatte gemäß Fig. 2 bei erfindungsgemäß abgedichteten Hohlräumen im Platteninnern.

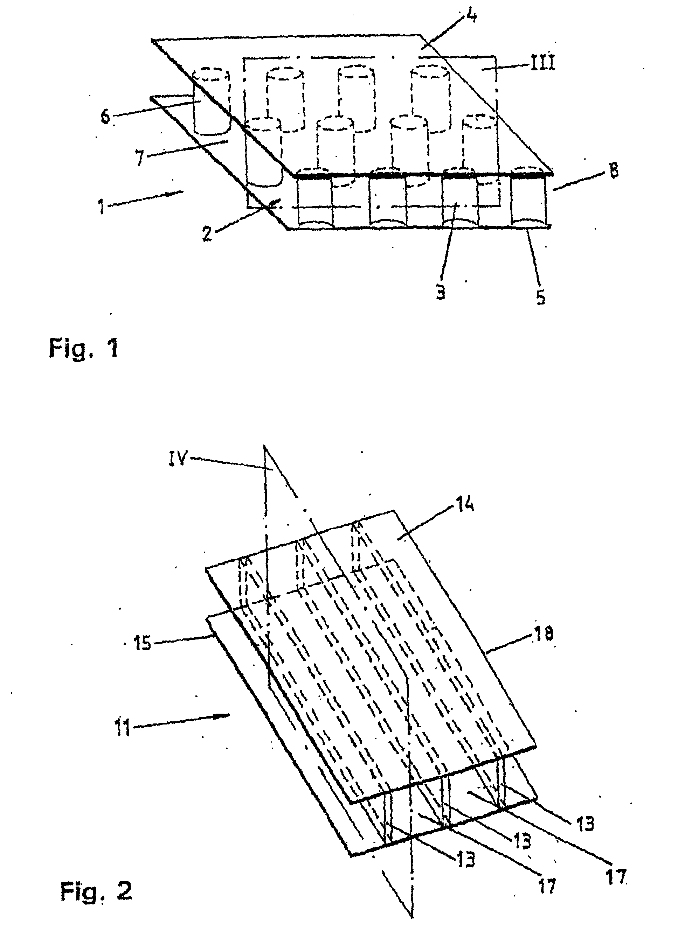

Gemäß Fig. 1 ist eine Hohlkörperplatte 1 aus Polypropylen, wie sie beispielsweise zur Herstellung von Verpackungsbehältern oder der Kofferraumböden von Kraftfahrzeugen verwendet wird, dreilagig aufgebaut. Eine Zwischenlage 2 mit nach unten offenen napfartigen Ausformungen 3 ist mit einer oberen Decklage 4 und einer unteren Decklage 5 verschweißt. Die napfartigen Ausformungen 3 sind mit Abstand voneinander angeordnet und bilden mit Wandungen 6 atmosphärische Luft enthaltende Gaseinschlüsse. Ein Teil der Wandungen 6 wird von der unteren Decklage 5 gebildet. Nachdem die napfartigen Ausformungen 3 auf Lücke angeordnet sind, ergibt sich um sie herum im Innern der Hohlkörperplatte 1 ein zusammenhängender Hohlraum 7, welcher zu einem Plattenrand 8 der Hohlkörperplatte 1 hin offen ist.

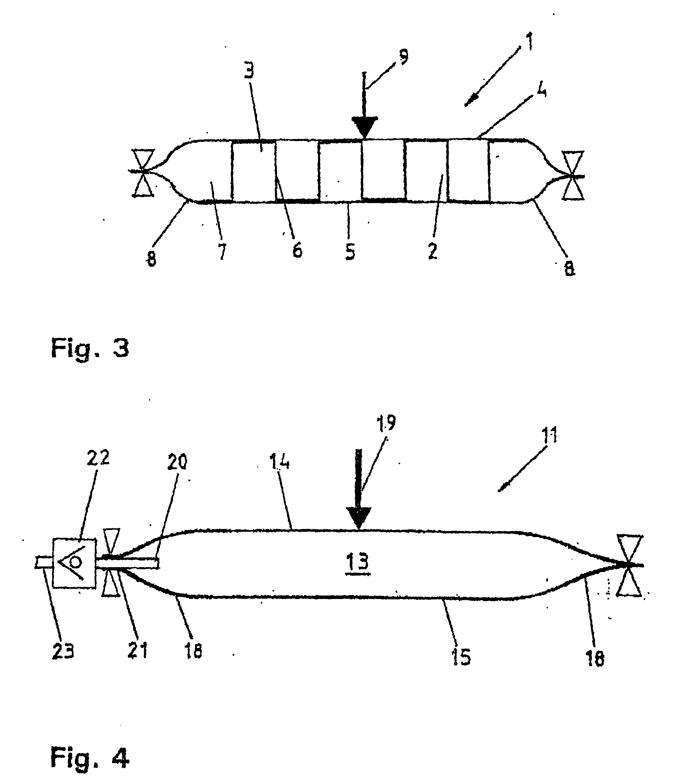

In bekannter Weise wird zum Verformen der Hohlkörperplatte 1 zunächst deren Plattenrand 8 über den gesamten Plattenumfang zusammengedrückt. Es ergehen sich dann die in Fig. 3 gezeigten Verhältnisse. Der Schnittebene von Fig. 3 ist in Fig. 1 das Bezugszeichen III zugeordnet. Nach dem Zusammendrücken des Plattenrandes 8 ist der Hohlraum 7 im Innern der Hohlkörperplatte 1 nach außen gasdicht verschlossen. Im zusammengedrückten Zustand wird der Plattenrand 8 durch entsprechende, in Fig. 3 angedeutete Druckausübung gehalten.

In dem Zustand gemäß Fig. 3 wird die Hohlkörperplatte 1 von außen mit Wasserdampf beaufschlagt und dadurch erwärmt. Mit dem Erwärmen einher geht eine Plastifizierung der Hohlkörperplatte 1. Die erweichte Hohlkörperplatte 1 wird schließlich mittels eines in Fig. 3 durch einen Pfeil 9 veranschaulichten Verformungsdruckes beispielsweise unter Erstellen von Mulden, in der Hohlkörperplatte 1 verformt. Während der Beaufschlagung der Hohlkörperplatte 1 mit dem äußeren Verformungsdruck 9 wirkt die in dem Hohlraum 7 im Innern der Hohlkörperplatte 1 bei druckbeaufschlagtem Plattenrand 8 eingeschlossene atmosphärische Luft als Luftpolster, welches einen dem Verformungsdruck 9 entgegengerichteten Druck ausübt und dadurch eine Komprimierung der erweichten Hohlkörperplatte 1 durch den Verformungsdruck 9 verhindert.

Nach dem Verformungsvorgang wird das erhaltene Formteil durch Abkühlen insgesamt stabilisiert. Der deformierte Flättenrand 8 kann dann entfernt werden.

Ausweislich Fig. 2 besteht eine Hohlkörperplatte 11 aus einer oberen Decklage 14, einer unteren Decklage 15 sowie zwischen der oberen Decklage 14 und der unteren Decklage 15 angeordneten Abstandhaltern in Form von Trennstegen 13. Im Innern der Hohlkörperplatte 11 befinden sich von der oberen Decklage 14, der unteren Decklage 15 sowie von jeweils zwei einander gegenüberliegenden Trennstegen 13 begrenzte Hohlräume 17, welche in einen Plattenrand 18 münden. Auch die Hohlkörperplatte 11 besteht aus Polypropylen.

Wie bereits im Falle der Hohlkörperplatte 1 gemäß den Fign. 1 und 3 wird auch zum Verformen der Hohlkörperplatte 11 zunächst deren Plattenrand 18 über den gesamten Umfang der Hohlkörperplatte 11 zusammengedrückt. Dabei werden allerdings abweichend von dem zuvor geschilderten Verfahren vor dem Deformieren des plattenrandes 18 in die Hohlräume 17 hineinragende Injektionskanülen 20 zwischen der oberen Decklage 14 und der unteren Decklage 15 angesetzt. Die Injektionskanülen 20 sorgen dafür, daß nach dem Zusammendrücken des Plattenrandes 18 Zufuhröffnungen 21 für in die Hohlräume 17 aufzugebendes Füllmedium ausgespart sind. Im einzelnen ist dies in Fig. 4 dargestellt. Auch in Fig. 4 ist angedeutet, daß der Plattenrand 18 nach dem Zusammendrücken druckbeaufschlagt bleibt.

Gemäß Fig. 4 sind die Injektionskanülen 20 über Rückschlagventile 22 an Zufuhrleitungen 23 für Füllmedium angeschlossen. An den von den Injektionskanülen 20 abliegenden Enden der Hohlräume 17 ist der Plattenrand 18 wie vorstehend zu den Fign. 1 und 3 beschrieben verpraßt. Insgesamt sind die Hohlräume 17 nach außen im wesentlich gasdicht verschlossen. In ihr Inneres wird nach dem Zusammendrücken des Plattenrandes 18 bei nach wie vor bestehender Druckbeaufschlagung des Plattenrandes 18 über die Injektionskanülen 20 Füllmedium in Form von Wasserdampf aufgegeben. Dieser über die injektionskanülen 20 zugeführte Wasserdampf bewirkt im zusammenspiel mit Wasserdampf, mit welchem die Hohlkörperplatte 1 gleichzeitig von außen beaufschlagt wird, deren Erwärmung und Plastifizierung. Auch die Hohlkörperplatte 11 wird nach dem Erweichen mittels eines äußeren Verformungsdruckes, in Fig. 3 durch einen Pfeil 19 symbolisiert, verformt. Das im Innern der Hohlräume 17 anstehende Gemisch aus atmosphärischer Luft und wasserdampf wirkt dabei in der vorstehend beschriebenen Art und Weise bei in Sperrstellung befindlichen Rückschlagventilen 22 einer unerwünschten Strukburänderung der Hohlkörperplatte 11 entgegen. Erforderlichenfalls kann auch während der Beaufschlagung der Hohlkörperplatte 11 mit dem äußeren Verformungsdruck 19 Füllmedium in die Hohlräume 17 aufgegeben werden.

Nach dem Abkühlen und dem damit verbundenen Verfestigen der verformten Hohlkörperplatte 11 werden die Injektionskanülen 20 aus den Zufuhröffnungen 21 herausgezogen und anschließend der deformierte Plattenrand 18 entfernt. Alternativ können die Injektionskanülen 20 auch bereits vor der Beaufschlagung der Hohlkörperplatte 11 mit dem äußeren Verformungsdruck 13 gezogen werden. In diesem Fall sind dann aber unmittelbar nach dem Ziehen der Injektiönskanülen 20 die an dem Plattenrand 18 verbleibenden zufuhröffnungen 21 für das zuvor aufgegebene Füllmedium dicht zu verschließen, ehe die Verformung der Hohlkörperplatte 11 einsetzen kann.

## Patentansprüche

1. Verfahren zum Verformen von Hohlkörperplatten (11) aus thermoplastischem Material mit wenigstens einem zu dem Plattenrand (18) hin offenen Hohlraum (17) im platteninnern, wobei der Hohlraum (17) im Platteninnern am Plattenrand (18) abgedichtet und dadurch nach außen im wesentlichen gasdicht verschlossen wird und wobei die zu verformende Hohlkörperplatte (11) unter Erwärmen erweicht und im erweichten Zustand bei nach außen im wesentlichen gasdicht verschlossenem Hohlraum (17) durch, äußere Beaufschlagung mit einem Verformungsdruck (19) verformt wird, **dadurch gekennzeichnet, daß** der Hohlraum (17) unter Offenlassen wenigstens einer Zufuhröffnung (21) für in den Hohlraum (17) aufzugebendes Füllmedium abgedichtet oder daß nach vollständigem Verschluß des Hohlraumes (17) wenigstens eine Zufuhröffnung (21) für Füllmedium in die Hohlraumwandung eingebracht wird und daß der nach außen im wesentlichen gasdicht verschlossene Hohlraum (17) mit wenigstens einem Füllmedium beschickt und die zu verformende Hohlkörperplatte (11) bei mit Füllmedium beschicktem Hohlraum (17) durch äußere Beaufschlagung mit dem Verformungsdruck (19) verformt wird.

2. Verfahren nach Anspruch 1, **dadurch gekennzeichnet, daß** der Hohlraum (17) unter Zusammendrücken des Plattenrandes (18) abgedichtet wird.

3. Verfahren nach einem der vorhergehenden Ansprüche, **dadurch gekennzeichnet, dass** zur Abdichtung des Hohlraums (17) eine Dichtmanschette auf den Plattenrand (18) aufgesetzt wird.

4. Verfahren nach einem der vorhergehenden Ansprüche, **dadurch gekennzeichnet, daß** der nach außen im wesentlichen gasdicht verschlossene Hohlraum (17) mit einem Füllmedium beschickt wird, dessen Temperatur die Ausgangstemperatur der zu verformenden Hohlkörperplatte (11) übersteigt.

5. Verfahren nach einem der vorhergehenden Ansprüche, **dadurch gekennzeichnet, daß** der nach außen im wesentlichen gasdicht verschlossene Hohlraum (17) mit wenigstens einem gasförmigen und/oder mit wenigstens einem flüssigen Füllmedium beschickt wird.

6. Verfahren nach einem der vorhergehenden Ansprüche, **dadurch gekennzeichnet, daß** der nach außen im wesentlichen gasdicht verschlossene Hohlraum (17) mit Wasserdampf als Füllmedium beschickt wird.

## Claims

1. Method of shaping hollow boards (11) which are made of a thermoplastic material and have at least one cavity (17) in the interior of the board which is open toward the board edge (18), the cavity (17) in the interior of the board being sealed at the board edge (18) and thus being closed from the exterior in a substantially gas-tight manner and the hollow board (11) to be shaped being softened by heating and, once it has been softened, being shaped by external application of a shaping pressure (19) when the cavity (17) is closed from the exterior in a substantially gas-tight manner, **characterised in that** the cavity (17) is sealed while leaving at least one feed orifice (21) open for filling medium which is to be introduced into the cavity (17) and **in that**, after complete closure of the cavity (17), at least one feed orifice (21) for filling medium is introduced into the cavity wall and **in that** the cavity (17) which is closed from the exterior in a substantially gas-tight manner is loaded with at least one filling medium and the hollow board (11) to be shaped is shaped by external application of the shaping pressure (19) when the cavity (17) is loaded with filling medium.

2. Method according to claim 1, **characterised in that** the cavity (17) is sealed by pressing together the board edge (18).

3. Method according to any of the preceding claims, **characterised in that** a sealing sleeve is applied to the board edge (18) in order to seal the cavity (17).

4. Method according to any of the preceding claims, **characterised in that** the cavity (17) which is closed from the exterior in a substantially gas-tight manner is loaded with a filling medium of which the temperature exceeds the original temperature of the hollow board (11) to be shaped.

5. Method according to any of the preceding claims, **characterised in that** the cavity (17) which is closed from the exterior in a substantially gas-tight manner is loaded with at least one gaseous and/or with at least one liquid filling medium.

6. Method according to any of the preceding claims, **characterised in that** the cavity (17) which is sealed from the exterior in a substantially gas-tight manner is loaded with water vapour as filling medium.

## Revendications

1. Procédé pour déformer des plaques à corps creux (11) en matériau thermoplastique avec au moins une cavité (17) à l'intérieur de la plaque ouverte vers le bord de plaque (18), la cavité (17) à l'intérieur de la plaque étant bouchée au bord de plaque (18) et ainsi essentiellement fermée vers l'extérieur de façon étanche aux gaz, et la plaque à corps creux à déformer (11) ramollissant sous l'effet du réchauffement et étant déformée à l'état ramolli avec la cavité (17) essentiellement fermée vers l'extérieur de façon étanche par l'application de l'extérieur d'une pression déformatrice, **caractérisé en ce que** la cavité (17) est bouchée en laissant au moins une ouverture (21) pour l'apport du milieu de remplissage à faire entrer dans la cavité (17) ou **en ce qu'**après le bouchage complet de la cavité (17), au moins une ouverture (21) pour l'apport du milieu de remplissage est aménagée dans la paroi de la cavité et que la cavité (17) essentiellement fermée vers l'extérieur de façon étanche aux gaz est alimentée par au moins un milieu de remplissage et que la plaque à corps creux à déformer (11) avec une cavité alimentée en milieu de remplissage est déformée par l'application extérieure de la pression déformatrice.

2. Procédé selon la revendication 1, **caractérisé en ce que** la cavité (17) est bouchée par la compression du bord de plaque (18).

3. Procédé selon l'une quelconque des revendications précédentes, **caractérisé en ce que** pour étanchéifier la cavité (17) une garniture d'étanchéité est posée sur le bord de plaque (18).

4. Procédé selon l'une quelconque des revendications précédentes, **caractérisé en ce que** la cavité (17) essentiellement fermée vers l'extérieur de façon étanche aux gaz est alimentée par un milieu de remplissage, dont la température dépasse la température de départ de la plaque à corps creux (11) à déformer.

5. Procédé selon l'une quelconque des revendications précédentes, **caractérisé en ce que** la cavité (17) essentiellement fermée vers l'extérieur de façon étanche aux gaz est alimentée par au moins un milieu gazeux et/ou au moins un milieu liquide.

6. Procédé selon l'une quelconque des revendications précédentes, **caractérisé en ce que** la cavité (17) essentiellement fermée vers l'extérieur de façon étanche aux gaz est alimentée en vapeur d'eau en tant que milieu de remplissage.
